# EUROPEAN PATENT SPECIFICATION

(11) **EP 3 840 982 B1**
(45) Date of publication and mention of the grant of the patent: **13.12.2023**
(21) Application number: 19759696.8
(22) Date of filing: 21.08.2019
(51) Int. Cl.: B60N 2/015, B60N 2/08, B64D 11/06

(54) **ADAPTABLE VEHICLE SEAT FITTING**
ANPASSBARER FAHRZEUGSITZBESCHLAG
FERRURE DE SIÈGE DE VÉHICULE ADAPTABLE

(30) Priority: 22.08.2018 GB 201813651
(43) Date of publication of application: 30.06.2021
(73) Proprietor: NMI Safety Systems Limited, Stevenage, Hertfordshire SG1 2BD (GB)
(72) Inventor: SAWDY, Michael, Swaffham, Norfolk PE37 7EU (GB)
(74) Representative: Forresters IP LLP
(86) International application number: PCT/GB2019/052350
(87) International publication number: WO 2020/039194

(56) References cited:
- EP-A1- 3 100 901
- GB-A- 2 517 149
- GB-A- 2 532 561
- US-A1- 2011 278 398

## Description

THE PRESENT INVENTION relates to a seat support, and more specifically relates to a seat support suitable for use in a vehicle such as a motor vehicle.

It has been proposed previously to provide seats in a motor vehicle that are mounted in position on rails, or which are adapted to engage a track on the floor of a vehicle and lockable in place by way of a pair of spaced apart plates which may be moved apart to bias the plates in a locking position, as set out in EP1034969.

US2012/0235011 discloses a type of fitting in which studs protrude from the underside of a main body, and may be retracted towards the main body to grip a part of the track. A plunger may then be pushed down into the track through one of the recesses to brace the fitting against longitudinal movement.

However, previously proposed seat mounting systems are relatively complex and require adjustments to be usable in different vehicle types, and are not always capable of being 'universal'.

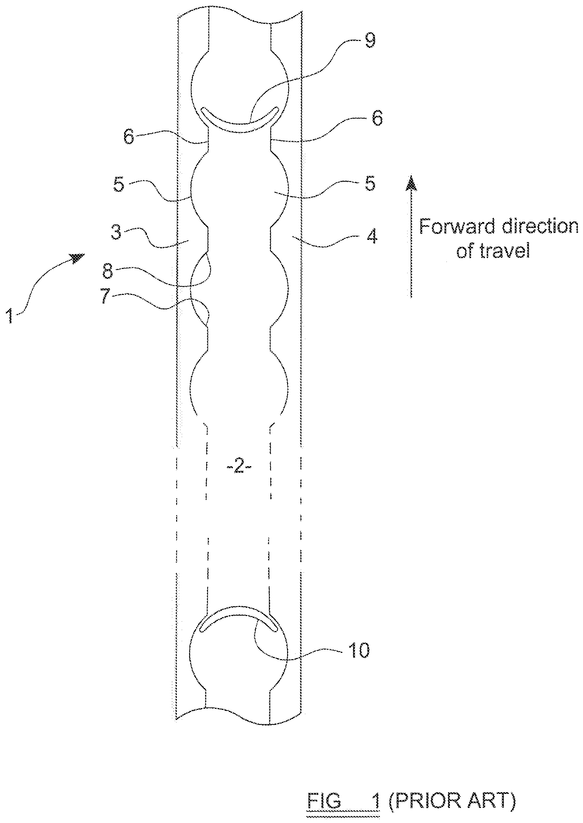

In GB2517149, an alternative seat support is disclosed, which is adapted to be used with a floor track 1 taking the form of an undercut slot 2, with inward-facing opposing lips 3, 4, as shown schematically in figure 1. The lips 3, 4 each have spaced-apart recesses 5 which are curved in shape, and the recesses 5 in the lips 3, 4 are aligned with each other. Protrusions 6 are formed between adjacent recesses 5, and each protrusion 6 forms two shoulders 7, 8, one 7 of which faces in the "forwards" direction (i.e. the normal direction of travel of the vehicle), and the other 8 of which faces in the opposite "backwards" direction.

The seat support of GB2517149 includes first and second locking portions 9, 10, which are also shown schematically in figure 1. When the support is installed and in the locked position, the first locking portion 9 (which is positioned at the front of the support) is braced against a forward-facing pair of shoulders 7, and the second locking portion 10 (which is positioned at the rear of the support) is braced against a rearward-facing pair of shoulders 8. The support is therefore locked longitudinally in place with respect to these shoulders 7, 8, and cannot move forwards or backwards along the track 1.

The design of support disclosed in GB2517149 has proved to be robust and practical, and supports made to the design have successfully passed the relevant safety standards that apply in the UK.

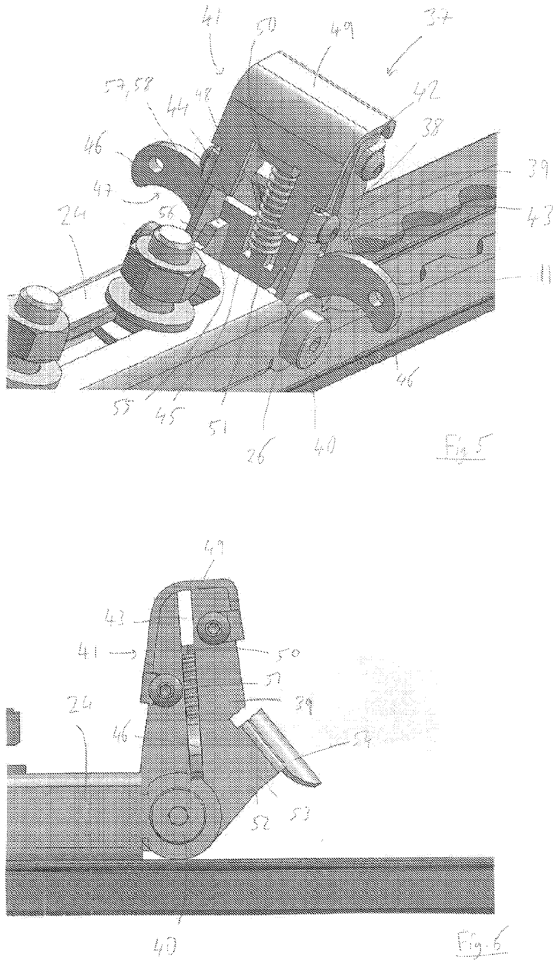

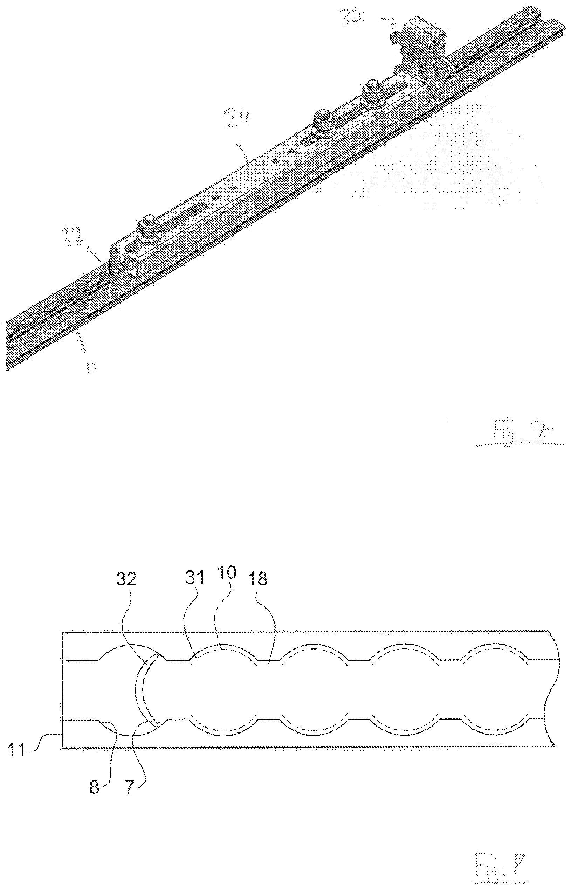

However, the inventor has realised that, if the second locking portion 10 is not properly locked in place (for instance, because the support has been installed by an inexperienced operator), there is a possibility of failure in the event of a head-on collision. In particular, if the second locking portion 10 does not provide adequate resistance, then in the event of a head-on collision the entire support will tend to move in the forward direction with respect to the track 1. The first locking portion 9 has, as can be seen in figure 1, clear space in front of it, and it can slide forward (along with the rest of the support) until it reaches the next pair of rear-facing shoulders 8. This movement is undesirable, but the reader will also understand that if the support slides forwardly so that the first locking portion contacts the rear-facing shoulders, the support will have moved from the "locked" position into a position in which the support may be lifted freely from the track, i.e. the support will have moved from the locking position shown in figure 8 of GB2517149 to the engagement position shown in figure 6.

The present invention seeks to provide an improved seat support, that enjoys the advantages of the design shown in GB2517149, but is more resistant to failure in a crash situation, particularly where the device may have been installed by an inexperienced operator.

Accordingly, the present invention provides a seat support according to claim 1.

Preferred features of the invention are set out in the dependent claims.

A further aspect of the present invention provides a seat according to claim 15.

In order that the invention may be more readily understood, the invention will now be described, by way of example, with reference to the accompanying drawings in which:
Figure 1 shows a prior art arrangement;
Figure 2 shows a track suitable for use with the present invention;
Figure 3 shows a seat support embodying the present invention;
Figure 4 shows a cross-sectional view of a main body of the seat support of figure 3;
Figures 5 and 6 show close-up views of a locking mechanism of the seat support of figure 3, in an unlocked position;
Figure 7 shows the seat support of figure 3 placed in a track in an engagement position;
Figure 8 is a schematic view of the position of a first bracing portion of the seat support in the engagement position, with respect to the track;
Figure 9 shows the seat support of figure 3 in a locking position with respect to the track;
Figure 10 is a schematic view of the position of a first bracing portion of the seat support in the locking position, with respect to the track;
Figures 11 and 12 show close-up views of a locking mechanism of the seat support of figure 3, in a locked position; and
Figure 13 is a view of a locking element suitable for use with the present invention.

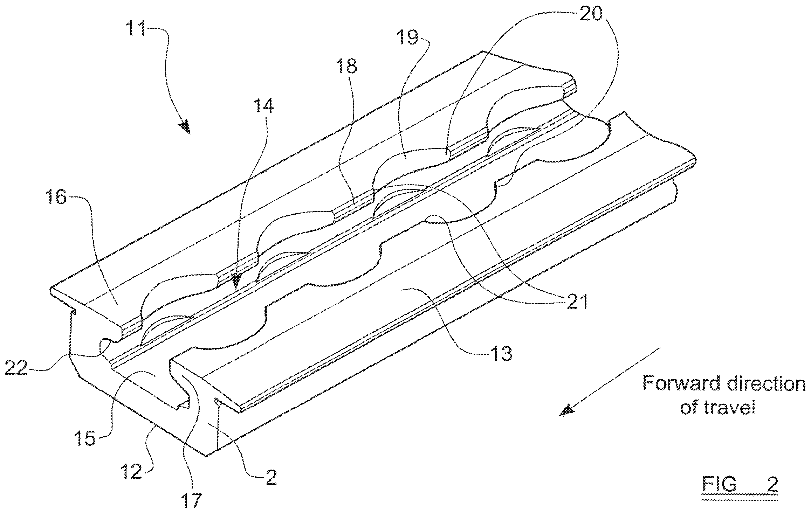

Referring initially to Figure 2, a track 11 adapted to be mounted in the floor of a motor vehicle is shown, and this track is the same as that discussed above in relation to figure 1. The track 11 preferably comprises an extrusion of an appropriate material, such as steel. The track 11 defines a planar under surface 12 adapted to be secured to the floor of a vehicle (not shown) and an upper surface 13 which may be substantially flush with the floor of the vehicle. A central slot 14 is provided in the track 11 which communicates with an under-cut channel 15. The track 11 thus prevents two inwardly directed lips 16, 17 on either side of the slot 14.

Each of the inwardly directed lips 16, 17 includes a series of first alternating protrusions 18 and recesses 19 along the length of the track 11. These protrusions 18 and recesses 19 will typically have a rounded profile, as shown in Figure 2, or may have a more square or angular profile, depending upon the application or vehicle being used. The protrusions 18 and recesses 19 on the two lips 16, 17 are substantially aligned with each other.

The first protrusions 18 define, as discussed above, shoulder surfaces on each side thereof, and the profile of the shoulder surfaces will depend upon the profile of the protrusions 18 and recesses 19. Each recess 19 defines a forward-facing shoulder 20 and a rear-facing shoulder 21.

Additionally, the underside of each of the first protrusions 18 may provide a bearing surface on 22 its inner face. The bearing surface 22 may extend to the entire surface of the undersides of each of the lips 16, 17. The area of the bearing surface 22 will depend upon the application, vehicle or track 1 being used.

This type of track has become widely used in vehicles, particularly in passenger vehicles such as coaches or buses.

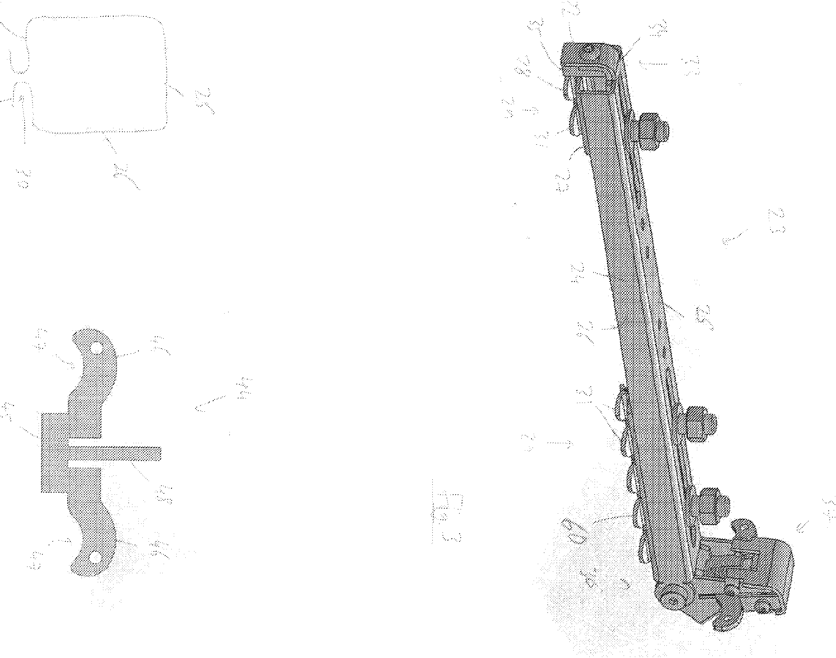

A seat support 23 is shown in Figure 3. The seat support 23 is generally elongate, and comprises a robust, elongate main body 24, which preferably functions as the main structural element of the seat support 23. In the embodiment shown in figure 3, the main body 24 takes the form of a sturdy, hollow beam with a generally rectangular cross-section. The main body 24 has a top wall 25 and opposing side walls 26. Over some of its length the main body 24 also has a bottom wall 27.

An interface arrangement 29 is secured to, or formed integrally with, the underside of the main body 24. In preferred embodiments, as shown in figure 4 (which shows a head-on view of a cross-section through the interface arrangement 29), the top wall 25 and side walls 26 of the main body 24 may be formed from a continuous sheet of a robust material, such as steel, and at the lower edges of the two side walls 26 the sheet is bent or folded inwardly to form the bottom wall 27. Where the two edges of the sheet meet one another, the sheet is bent or folded downwardly, away from the top wall 25, and the two portions of the sheet extend together to form a spacing portion 30. A series of spaced-apart protrusions 31 extend outwardly from the bottom of the spacing portion 30, generally parallel with the bottom wall 27.

In other embodiments the interface arrangement 29 takes the form of one or more separate pieces which are attached to the underside of the main body 24. However, for strength and simplicity is it preferred that the interface arrangement 29 is formed integrally with the main body 24.

The shape and spacing of the protrusions 31 preferably corresponds exactly or approximately to the shape and spacing of the recesses 19 formed in the lips 16, 17 of the track 11. In the embodiment shown, therefore, the protrusions 31 each have a rounded profile.

In the embodiment shown, the interface arrangement 29 of the support 23 has two interface portions, a front interface portion 28 which is provided at or near the front of the main body 24, and a rear interface portion 60 which is provided at or near the rear of the main body 24. In this embodiment the rear interface portion 60 comprises more protrusions 31 than the front interface portion 28, for reasons which will be discussed below. However, other embodiments may have different arrangements, and may comprise a single interface portion running along the underside of all or some of the main body 24.

In the embodiment shown, between the front and rear interface portions 28, 60 the main body 24 is open on its bottom side, and has little or no bottom wall. This saves on the weight and cost of the support 23, although in other embodiments the main body 24 may have a bottom wall 27 extending over more, or all, of its length.

The seat support 23 also includes a first bracing portion 32, which is positioned at the front end 33 of the support 23. It is envisaged that the first bracing portion 32 will be fixed with respect to the main body 24, or formed integrally therewith, depending upon the intended application and size of the seat support 23. In Figure 3, the first bracing portion 32 is integrally formed as part of the main body 24, and is provided at the front end 33 of the main body 24. In the embodiment shown, the upper wall 25 of the main body 24 has a portion 34 which extends forwardly, and is deflected downwardly (preferably through around 90°) to form the first bracing portion 32. The width of the first bracing portion 32 is greater than the spacing between the inward-facing lips 16, 17 of the track 11 where these lips 16,17 for protrusions 18, but less than the spacing between the lips 16, 17 where the lips 16, 17 form recesses 19.

An additional layer of strengthening material 35 may be provided, and in the embodiment of figure 3 the strengthening material 35 is bonded to the rear side of the first bracing portion 32. The width of this strengthening material is, in preferred embodiments, less than the spacing between the inward-facing lips 16, 17 of the track 11.

At a rear end 36 of the main body 24, a locking mechanism 37 is provided.

More close-up views of some features of the locking mechanism 37, in an unlocked position, are shown in figures 5 and 6. The locking mechanism 37 comprises a main body 38 which, in the example shown, takes the form of a pair of spaced-apart sturdy side plates 39 made from a robust material such as steel. The main body 38 is attached to the rear end 36 of the main body 24. In the embodiment shown in figure 5, the side walls 26 of the main body 24 extend rearwardly beyond the top wall 24, and have attachment holes formed therethrough. The side plates 39 are pivotably connected to the attachment holes, for instance by way of a bolt 40 or rod which passes through both side plates 39 and both attachment holes.

The main body 38 has an operating portion 41, which protrudes generally upwardly and rearwardly from the rear end 36 of the main body 24, and is of sufficient length to be grasped by a user so the user can pivot the main body 38 with respect to the support 24. The two side plates 39 have protrusions 42 which form the operating portion 41, and these protrusions 42 have elongate slots 43 running along all or part of their length. A locking element 44 is positioned within the operating portion 41, and the locking element 44 is shown in isolation in figure 6. The locking element 44 is preferably formed from a sheet of a robust material such as steel, and may for example be stamped or cut out of a sheet of this material. The locking element 44 has a lock portion 45, which preferably comprises a generally straight region, at or near the middle thereof, and two protruding arms 46 which extend outwardly therefrom. In the example shown each arm 46 is arcuate, having a recessed region 47 of suitable size to accommodate a finger of a user. A connection portion 48 of the locking element 44 takes the form of an elongate strip or rod of the material from which the locking element 44 is formed, and extends away from the lock portion 45, between the arms 46.

The locking element is shown in isolation in figure 13.

Returning to figure 5, the locking element 44 is located within the operating portion 41 of the main body 38, with the lock portion 45 positioned between the side plates 39, and the arms 46 protruding outwardly through the slots 43. It can therefore be seen that the locking element 44 can slide within the main body 38, guided by the slots 43.

A top piece 49, which is preferably generally trough-shaped, is fitted over the top ends of the side plates 39, where the side plates 39 form the operating portion 41, and secured to the side plates 39. The top piece 49 helps to maintain the alignment and spacing of the side plates 39. The top piece 49 also has a guide portion 50, which lies between the side plates 39, and the connection portion 48 of the locking element 44 passes through a guide aperture (not shown) in the guide portion 50. A biasing spring 51 is positioned around the connection portion 48. The biasing spring 51 presses at its bottom end against the lock portion 45, and at its top end against the guide portion 50. The biasing spring 51 is in compression.

The locking mechanism 37 also comprises a bracing portion support 52 (visible in figure 6, which shows a side view of the locking mechanism 37), which is connected to the operating portion 41 so that, when the operating portion 41 pivots with respect to the main body 24 of the support 23, the bracing portion support 52 also pivots with respect to the main body 24 of the support 23.

In the example shown the bracing portion support 52 takes the form of extensions 53 of the side plates 39, with these extensions 53 being radially spaced apart from the operating portion 41.

At the distal ends of the extensions 53 of the side walls 39, a second bracing portion 54 extends between and joins the side walls 39. The second bracing portion 54 is preferably formed integrally with the side walls 39.

A cam arrangement 55 has an engagement portion (not shown) that fits into the open rear end 36 of the main body 24. The cam arrangement 55 protrudes from the rear end 36, and has a pair of cam plates 56 which lie between the side plates 39 of the operating portion 41 of the locking mechanism 37.

The cam arrangement 55 is fixed in place with respect to the main body 24, and preferably is attached to the bolt 40 (or other attachment arrangement) that holds the locking mechanism 37 to the main body 24.

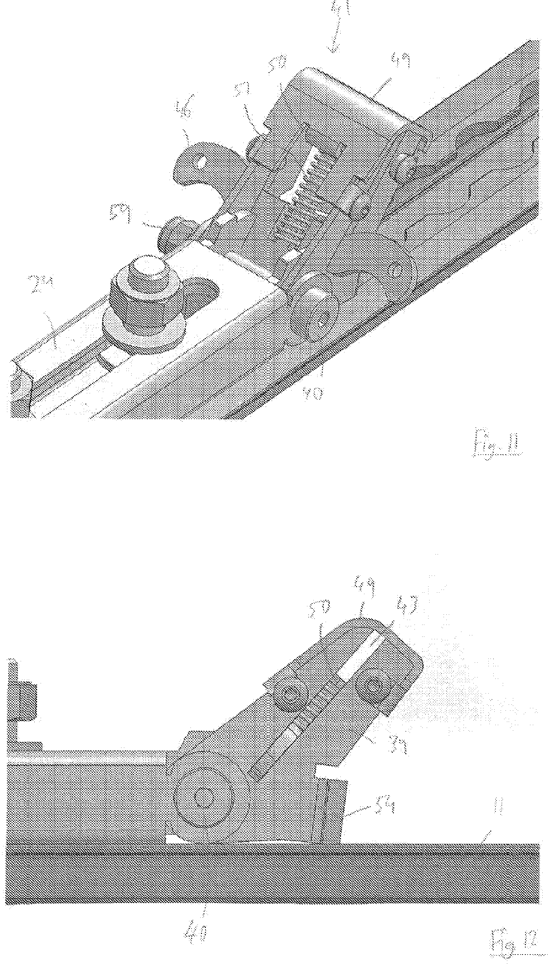

Each cam plate 56 has an edge 57, which is shaped to have a holding portion 58 and a locking slot 59 (not visible in figure 5 or 6, but shown in figure 11). The lock portion 45 of the locking element 44 rests on the edges 57 of the cam plates 56. When the lock portion 45 lies on the holding portion 58, the locking element 44 is held at a first position within the operating portion 41. However, when the lock portion 45 moves into the locking slot 59, the biasing spring 51 drives the locking element 44 downwardly into a second position within the operating portion 41. This will be explained in more detail below.

Engagement of the seat support 23 with a track 11 will now be described.

In an initial stage, the seat support 23 is placed onto a track 11 (of the type shown in figure 2) in an engagement position, in which the protrusions 31 of the seat support 23 are aligned with the recesses 19 of the track 11. The protrusions 31 of the seat support 23 may therefore pass through the recesses 19 of the track, so that the protrusions 31 of the seat support 23 pass into the channel 15 of the track 11, between the under surface 12 of the track 11 and the undersides of the lips 16, 17.

This engagement position is shown in figure 7, which shows a perspective view. Figure 8 shows a schematic view of the alignment of the protrusions 31 of the seat support 23 and the protrusions 18 and recesses 19 of the track 11, as well as the first bracing portion 32. It can be seen that, in the engagement position, the first bracing portion 32 lies near the middle of one of the recesses 19 of the track 11, spaced apart from both the forward-facing and rear-facing shoulders 7, 8.

In the engagement position, the main body 38 of the locking mechanism 37 is pivoted, with respect to the main body 24, upwardly away from the track 11 into a raised position, in which the second bracing portion 54 is above the level of the upper surface 13 of the track 11. In this unlocked position, the lock portion 45 of the locking element 44 lies on the holding portion 58 of the edge 57 of each cam plate 56.

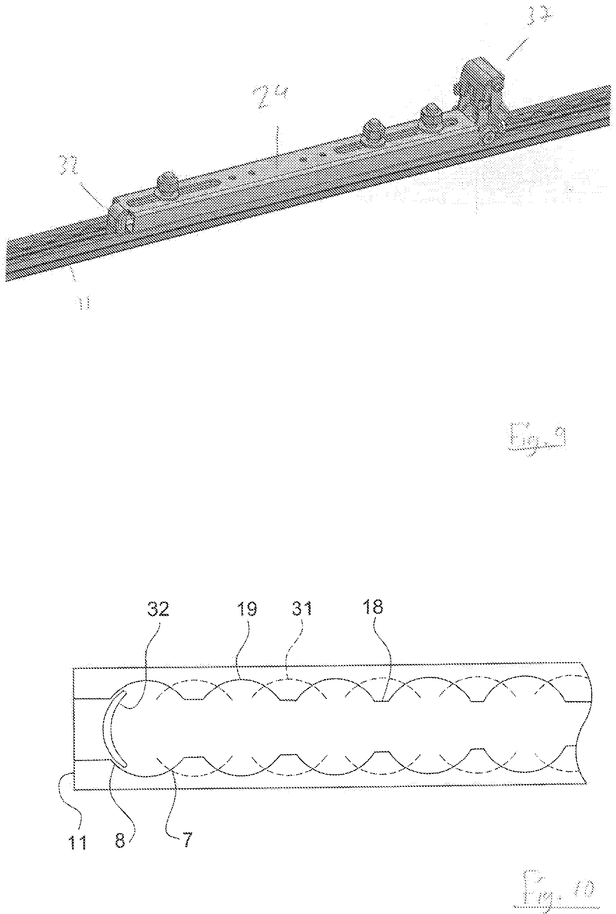

The seat support 23 is then slid forwardly with respect to the track 11, so that the first bracing portion 32 abuts against a pair of rearward-facing shoulders 8. A perspective view of this position is shown in figure 9, and this position is also shown schematically in figure 10. As in figure 8, the positions of the protrusions 31 of the support 23 are shown in dashed lines, and it can be seen that the protrusions 31 now align with or overlap with the protrusions 18 of the track 11. It will therefore be understood that, in this position, the seat support 23 cannot be separated from the track 11 by lifting the seat support 23 directly upwardly and away from the track 11. This is the locking position of the seat support 23 with respect to the track 11.

The user then rotates the operating portion 41 of the locking mechanism 37, in a direction to move the second bracing portion 54 downwardly towards the track 11. As this motion occurs, the locking element 44 slides along the holding portions 58 of the edges 57 of the cam plates 56, until the locking element 44 is aligned with the locking slot 59 of each cam plate 56. The locking element 44 is then driven downwardly into the locking slots 59 by the biasing spring 51. The locking element 44 (and hence the main body 38 of the locking mechanism 37) is then held rotationally in place with respect to the main body 24 of the support 23, because the locking element 44 is held in place between the edges of the locking slots 59, and cannot rotate in either direction. This is the locked position of the locking mechanism 37, which is shown in figures 11 and 12.

When the support 23 is placed into the track 11, and the locking mechanism 37 is in the locked position, at least a part of the second bracing portion 54 lies in the plane containing the lips 16, 17 of the track 11.

The spacing between the first and second bracing portions 32, 54 is such that, when the support 23 is in the locking position with respect to the track 11, and the first bracing portion 32 is braced against a pair of rear-facing shoulders 21, and the locking mechanism 37 is moved to the locked position, the second bracing portion 54 is braced against a pair of forward-facing shoulders 20.

In preferred embodiments, the second bracing portion 54 has an inclined surface so that, as it pivots into the locking position, the inclined surface progressively engages a pair of forward-facing shoulders 20. This helps to ensure that the second bracing portion 54 braces firmly against the pair of forward-facing shoulders 20.

The support 23 is now locked in place with respect to the track 11, which is shown in figure 10. The skilled reader will appreciate that, because the first bracing portion 32 is braced against a pair of rear-facing shoulders 21, and the second bracing portion 54 is braced against a pair of forward-facing shoulders 20, the support is held rigidly in place with respect to the track 11 and cannot move laterally in either direction with respect to the track 11. The support 23 also cannot be lifted away from the track 11, because the protrusions 31 of the interface arrangement 29 are aligned with the protrusions 18 of the track 11. The support 23 is therefore firmly and reliably held in place with respect to the track 11, and will have little or no scope for movement or "play" with respect to the track 11.

It should also be noted that the alignment of the support 23 with the protrusions 18 and recesses 19 of the track 11 occurs in a straightforward, easy and reliable way during installation of the support 23. This is in contrast to many other designs of support, in which alignment of a locking pin or bracing member with the correct part of the track may require considerable time and judgement, and/or where the support may have to be "wriggled" back and forth to achieve the correct engagement between the support and the track.

If a seat is attached to the floor of a vehicle, by way of the support 23, and the vehicle is involved in a head-on collision, the seat (along with the support 23) will effectively be thrown forwardly with respect to the vehicle. However, the support 23 will not be able to move forwardly with respect to the floor of the vehicle, because the first bracing portion 32 is already braced against a pair of rear-facing shoulders 21.

Similarly, if the vehicle is involved in a collision in which the seat is thrown rearwardly with respect to the vehicle (e.g. if the vehicle is struck from behind by another vehicle), the support 23 will also not be able to move rearwardly with respect to the floor of the vehicle, because the second bracing portion 54 is already braced against a pair of forward-facing shoulders 20.

In addition, in preferred embodiments as the second bracing portion 54 engages with a pair of forward-facing shoulders 20, this tends to lift the main body 24 upwardly with respect to the track 11. The reader will therefore understand that the undersides of the lips 16, 17 of the track 11 are pressed firmly against the top surfaces of the protrusions 19 of the support 23. This holds the seat support 23 firmly in place with respect to the track 11 in the vertical direction (i.e. in a direction perpendicular to the upper surface 13 of the track 11), reducing or eliminating any movement, vibration or "play" between the seat support 23 and the track 11.

In order to remove the seat support 23 from the track 11, the user may grasp the arms 46 of the locking element 44 and pull the locking element 44 upwardly against the biasing spring 51 (the recessed regions 47 of the arms 46 will assist the user in this action). This will lift the lock portion 45 of the locking element 44 out of the locking slot 59. The user may then rotate the operating portion 41 so as to lift the second bracing portion 54 out of the track 11. As this occurs, the lock portion 45 will become aligned with the holding portions 58 of the cam plates 56, and when the user releases the arms 46 of the locking element 44, the lock portion 45 will once again rest on the holding portions 58 of the cam plates 56.

The user can then slide the support 24 rearwardly with respect to the track 11, to move the support 24 from the locking position back into the engagement positions, shown in figures 7 and 8. The support 24 may then be lifted away from the track 11, to be re-engaged in a different position, or simply removed altogether.

The locking mechanism 37 described above is one example of a mechanism that may be used in conjunction with the invention. However, the invention is not limited to this, and any suitable alternative kind of locking mechanism may equally be used.

In the description above, the first bracing portion 32, which is provided at the front of the main body 24, is fixed in place with respect to the main body 24, while the second bracing portion 54, which is provided at the rear of the main body 24, is movable with respect to the main body 24. This may be reversed in other embodiments of the invention.

The skilled reader will understand that the embodiments described above provide simple and robust arrangements for securing a support to a track. In particular, even if used by an unfamiliar operator, a support embodying the invention should have a high level of safety and a low failure rate in the event of a head-on collision.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof, as defined in the claims.

## Claims

1. A seat support (23) for use with a vehicle seat and adapted to engage a track (11) provided on the floor of a vehicle, the track (11) comprising two inwardly-directed lips (16, 17) on opposed sides of a slot (14), the lips (16, 17) providing first alternating protrusions (18) and recesses (19) along the length of the track (11), the protrusions (18) being spaced apart by a spacing distance, the first and second protrusions (18) defining shoulder surfaces on each side thereof,
the seat support (23) having an elongate main body (24) and comprising:
an interface portion (29) which has a profile comprising second alternating protrusions (31) and recesses, the protrusions (31) being spaced apart by the same spacing distance; and
a first bracing member (32) provided at or near a forward end of the main body (24), and a second bracing member (54) provided at or near a rear end of the main body (24); wherein:
the seat support (23) is configured such that the second protrusions (31) may be aligned with the first recesses (19) so that the interface portion (29) may be placed within the slot (14) in an engagement position, the seat support (23) being moveable with respect to the slot (14), from the engagement position into a bracing position in which the first and second protrusions (18, 31) are substantially aligned, preventing the interface portion (29) from being removed from the slot (14);
one of the first bracing member (32) and the second bracing member (54) is a fixed bracing member, being substantially fixed in place with respect to the main body (24) of the seat support (23), so that in both the engagement position and the bracing position the first bracing member (32) can be received in one of the recesses (19) of the track (11);
the other one of the first bracing member (32) and the second bracing member (54) is a moveable bracing member, being movable with respect to the main body (24) of the seat support (23), between a retracted position, in which, when the interface portion (29) is placed within the slot (14), the movable bracing member is above the level of the track (11), and a locking position, in which, when the interface portion (29) is placed within the slot (14), the moveable bracing member extends into the slot (14);
**characterised in that** when the seat support (23) is in the bracing position and the movable bracing member (54) is in the locking position, the first and second bracing members (32, 54) are in a position to be received in respective recesses (19) of the track (11), the first bracing member (32) is in a position to be braced against a first pair of shoulders (8) on the track (11) that face towards the rear of the main body (24), and the second bracing member (54) is positioned to be braced against a second pair of shoulders (7) on the track (11) that face towards the front of the main body (24).

2. a seat support (23) according to claim 1, wherein the first bracing member (32) is provided at or near the front of the main body (24), and the second bracing member (54) is provided at or near the rear of the main body (24).

3. A seat support (23) according to claim 1 or 2, further comprising an operating member (41) which a user may operate to move the movable bracing member (54) between the retracted position and the locked position, and preferably wherein the operating member (41) is pivotable with respect to the main body (24).

4. A seat support (23) according to claim 3, further comprising a locking mechanism (37), operable to lock the movable bracing member (54) in the locked position when the movable bracing member (54) is moved from the retracted position to the locked position through operation of the operating member (41).

5. A seat support (23) according to claim 4, wherein the locking mechanism (37) comprises a locking element (44) which movable between a locked position and an unlocked position, and preferably wherein the movable bracing member (54) pivots with respect to the main body (24) between the retracted position and the locking position, and wherein, when the locking element (44) is in the locked position, the movable bracing member (54) may not pivot with respect to the main body (24).

6. A seat support (23) according to claim 5, wherein the locking element (44) is biased into the locked position.

7. A seat support (23) according to any one of claims 4 to 6, further comprising a handle which a user may grasp to remove the movable bracing member (54) from the locked position.

8. A seat support (23) according to any one of claim 4 to 6, wherein the movable bracing member (54) is attached to, or carried by part of, the locking mechanism (37).

9. A seat support (23) according to any preceding claim wherein, when the movable bracing member (54) is in the locked position, at least one protrusion of the interface portion (29) is pressed against the underside of at least one of the lips (16, 17) of the track (11).

10. A seat support (23) according to any preceding claim, wherein the movable bracing member (54) is suitable to progressively engage the pair of shoulders (7) as the movable bracing member (54) is moved from the retracted position to the locking position, and preferably wherein the movable bracing member (54) has an inclined surface which is suitable to brace against the pair of shoulders (7).

11. A seat support (23) according to any preceding claim, wherein the first and/or second protrusions (18, 31) have a rounded profile.

12. A seat support (23) according to any preceding claim wherein, when the seat support (23) is placed on the track (11) in the engagement position and then moved longitudinally with respect to the track (11), the fixed bracing member (32) contacts a pair of shoulders (8) of the track (11) and acts as a stop, so that the seat support (23) is in the bracing position.

13. A seat support (23) according to any preceding claim, wherein the track (11) comprises forward-facing shoulders (7) and rearward-facing shoulders (8), and wherein, in the bracing position, the first bracing member (32) is suitable to be braced against a pair of rearward-facing shoulders (8), and the second bracing member (54) is suitable to be braced against a pair of forward-facing shoulders (7).

14. A seat support (23) according to any previous claim in combination with a track (11) which comprises:
two inwardly-directed lips (16, 17) on opposed sides of a slot (14), the lips (16, 17) providing first alternating protrusions (18) and recesses (19) along the length of the track (11), the protrusions (18) being spaced apart by a spacing distance, the first and second protrusions (18) defining shoulder surfaces (7, 8) on each side thereof.

15. A seat including a seat support (23) in accordance with any previous claim.

## Patentansprüche

1. Eine Sitzbefestigung (23) zur Verwendung mit einem Fahrzeugsitz und dazu angepasst, mit einer Schiene (11) in Eingriff zu kommen, die auf dem Boden eines Fahrzeugs vorgesehen ist, wobei die Schiene (11) zwei nach innen gerichtete Kanten (16, 17) auf gegenüberliegenden Seiten eines Schlitzes (14) umfasst, **dadurch gekennzeichnet, dass** die Kanten (16, 17) erste alternierende Vorsprünge (18) und Aussparungen (19) entlang der Länge der Schiene (11) aufweisen, wobei die Vorsprünge (18) um einen Abstand voneinander beabstandet sind, **dadurch gekennzeichnet, dass** die ersten und zweiten Vorsprünge (18) Schulterflächen auf jeder Seite davon definieren,
wobei die Sitzbefestigung (23) einen länglichen Grundkörper (24) aufweist und Folgendes umfasst:
Einen Schnittstellenteil (29), der ein Profil aufweist, das zweite alternierende Vorsprünge (31) und Aussparungen umfasst, wobei die Vorsprünge (31) um den gleichen Abstand voneinander beabstandet sind; und
ein erstes Klammerglied (32), das an oder nahe einem vorderen Ende des Grundkörpers (24) angeordnet ist, und ein zweites Klammerglied (54), das an oder nahe einem hinteren Ende des Grundkörpers (24) angeordnet ist; **dadurch gekennzeichnet, dass**:
die Sitzbefestigung (23) so ausgebildet ist, dass die zweiten Vorsprünge (31) mit den ersten Aussparungen (19) ausgerichtet werden können, so dass der Schnittstellenteil (29) innerhalb des Schlitzes (14) in einer Eingriffsposition platziert werden kann, wobei die Sitzbefestigung (23) bezogen auf den Schlitz (14) aus der Eingriffsposition in eine Klammerlage bewegbar ist, bei der die ersten und zweiten Vorsprünge (18, 31) im Wesentlichen ausgerichtet sind, wodurch verhindert wird, dass der Schnittstellenteil (29) aus dem Schlitz (14) entfernt wird;
eines von dem ersten Klammerglied (32) und dem zweiten Klammerglied (54) ein festes Klammerglied ist, das bezogen auf den Grundkörper (24) der Sitzbefestigung (23) im Wesentlichen ortsfest ist, so dass das erste Klammerglied (32) sowohl in der Eingriffsposition als auch in der Klammerlage in einer der Aussparungen (19) der Schiene (11) aufgenommen werden kann;
das andere von dem ersten Klammerglied (32) und dem zweiten Klammerglied (54) ein einstellbares Klammerglied ist, das bezogen auf den Grundkörper (24) der Sitzbefestigung (23) zwischen einer zurückgezogenen Position, in der sich das bewegliche Klammerglied oberhalb der Ebene der Schiene (11) befindet, wenn der Schnittstellenteil (29) innerhalb des Schlitzes (14) platziert wird, und einer Verriegelungsposition, in der sich das bewegliche Klammerglied in den Schlitz (14) erstreckt, wenn der Schnittstellenteil (29) innerhalb des Schlitzes (14) platziert wird, beweglich ist;
**dadurch gekennzeichnet, dass**, wenn sich die Sitzbefestigung (23) in der Klammerlage und das bewegliche Klammerglied (54) in der Verriegelungsposition befindet, sich das erste und zweite Klammerglied (32, 54) in einer Position befinden, in der sie in jeweiligen Aussparungen (19) der Schiene (11) aufgenommen werden, wobei das erste Klammerglied (32) sich in einer Position befindet, um gegen ein erstes Schulterpaar (8) an der Schiene (11) verspannt zu werden, die zur Rückseite des Grundkörpers (24) ausgerichtet ist, und das zweite Klammerglied (54) in so einer Weise ausgerichtet ist, dass es gegen ein zweites Schulterpaar (7) an der Schiene (11) verspannt wird, das zur Vorderseite des Grundkörpers (24) ausgerichtet ist.

2. Die Sitzbefestigung (23) gemäß Anspruch 1, **dadurch gekennzeichnet, dass** das erste Klammerglied (32) an oder nahe einem vorderen Ende des Grundkörpers (24) angeordnet ist, und das zweite Klammerglied (54) an oder nahe einem hinteren Ende des Grundkörpers (24) angeordnet ist.

3. Die Sitzbefestigung (23) gemäß Anspruch 1 oder 2, die ferner ein Betätigungselement (41) umfasst, das ein Benutzer betätigen kann, um das bewegliche Klammerglied (54) zwischen der zurückgezogenen Position und der Verriegelungsposition einzustellen, und wobei das Betätigungselement (41) vorzugsweise bezogen auf den Grundkörper (24) schwenkbar ist.

4. Die Sitzbefestigung (23) gemäß Anspruch 3, die ferner einen Verriegelungsmechanismus (37) umfasst, der, um das bewegliche Klammerglied (54) in der Verriegelungsposition zu verriegeln, betätigt werden kann, wenn das bewegliche Klammerglied (54) durch Betätigung des Betätigungselements (41) von der zurückgezogenen Position in die Verriegelungsposition bewegt wird.

5. Die Sitzbefestigung (23) gemäß Anspruch 4, **dadurch gekennzeichnet, dass** der Verriegelungsmechanismus (37) ein Verriegelungselement (44) umfasst, das zwischen einer verriegelten Position und einer entriegelten Position bewegt werden kann, und wobei das bewegliche Klammerglied (54) vorzugsweise bezogen auf den Grundkörper (24) zwischen der zurückgezogenen Position und der Verriegelungsposition schwenkt, und wobei, wenn sich das Verriegelungselement (44) in der Verriegelungsposition befindet, das bewegliche Klammerglied (54) nicht bezogen auf den Grundkörper (24) schwenken kann.

6. Die Sitzbefestigung (23) gemäß Anspruch 5, **dadurch gekennzeichnet, dass** das Verriegelungselement (44) in die Verriegelungsposition vorgespannt ist.

7. Die Sitzbefestigung (23) gemäß einem der Ansprüche 4 bis 6, die ferner einen Griff aufweist, den ein Benutzer greifen kann, um das bewegliche Klammerglied (54) aus der Verriegelungsposition zu entfernen.

8. Die Sitzbefestigung (23) gemäß einem der Ansprüche 4 bis 6, **dadurch gekennzeichnet, dass** das bewegliche Klammerglied (54) an dem Verriegelungsmechanismus (37) angebracht ist oder von einem Teil davon getragen wird.

9. Die Sitzbefestigung (23) gemäß einem der vorhergehenden Ansprüche, **dadurch gekennzeichnet, dass**, wenn sich das bewegliche Klammerglied (54) in der Verriegelungsposition befindet, mindestens ein Vorsprung des Schnittstellenteils (29) gegen die Unterseite von mindestens einer der Kanten (16, 17) der Schiene (11) gedrückt wird.

10. Die Sitzbefestigung (23) gemäß einem der vorhergehenden Ansprüche, **dadurch gekennzeichnet, dass** das bewegliche Klammerglied (54) sich dafür eignet, zunehmend mit dem Schulterpaar (7) in Eingriff zu kommen, wenn das bewegliche Klammerglied (54) von der zurückgezogenen Position in die Verriegelungsposition bewegt wird, und wobei das bewegliche Klammerglied (54) vorzugsweise eine Schrägfläche aufweist, die dafür geeignet ist, gegen das Schulterpaar (7) verspannt zu werden.

11. Die Sitzbefestigung (23) gemäß einem der vorhergehenden Ansprüche, **dadurch gekennzeichnet, dass** die ersten und/oder zweiten Vorsprünge (18, 31) ein abgerundetes Profil aufweisen.

12. Die Sitzbefestigung (23) gemäß einem der vorhergehenden Ansprüche, **dadurch gekennzeichnet, dass**, wenn die Sitzbefestigung (23) in der Eingriffsposition auf der Schiene (11) platziert wird und dann in Längsrichtung bezogen auf die Schiene (11) bewegt wird, das befestigte Klammerglied (32) mit einem Schulterpaar (8) der Schiene (11) in Berührung kommt, und als Anschlag wirkt, so dass die Sitzbefestigung (23) sich in der Klammerlage befindet.

13. Die Sitzbefestigung (23) gemäß einem der vorhergehenden Ansprüche, **dadurch gekennzeichnet, dass** die Schiene (11) nach vorne gerichtete Schultern (7) und nach hinten gerichtete Schultern (8) aufweist, und wobei, in der Klammerlage, das erste Klammerglied (32) dafür geeignet ist, gegen ein Paar nach hinten gerichtete Schultern (8) verspannt zu werden, und das zweite Klammerglied (54) dafür geeignet ist, gegen ein Paar nach vorne gerichtete Schultern (7) verspannt zu werden.

14. Die Sitzbefestigung (23) gemäß einem der vorhergehenden Ansprüche in Verbindung mit einer Schiene (11), die
zwei nach innen gerichtete Kanten (16, 17) auf gegenüberliegenden Seiten eines Schlitzes (14) umfasst, **dadurch gekennzeichnet, dass** die Kanten (16, 17) erste alternierende Vorsprünge (18) und Aussparungen (19) entlang der Länge der Schiene (11) aufweisen, wobei die Vorsprünge (18) um einen Abstand voneinander beabstandet sind, **dadurch gekennzeichnet, dass** die ersten und zweiten Vorsprünge (18) Schultern (7, 8) auf jeder Seite davon definieren.

15. Ein Sitz mit einer Sitzbefestigung (23) gemäß einem der vorhergehenden Ansprüche.

## Revendications

1. Un support de siège (23) destiné à être utilisé avec un siège de véhicule et adapté pour s'engager dans un rail (11) fourni sur le plancher d'un véhicule, le rail (11) comprenant deux lèvres dirigées vers l'intérieur (16, 17) sur les côtés opposés d'une fente (14), les lèvres (16, 17) fournissant des premières saillies (18) et évidements (19) alternés sur la longueur du rail (11), les saillies (18) étant espacées d'une distance d'espacement, les premières et deuxièmes saillies (18) définissant des surfaces d'épaulement sur chaque côté de celles-ci,
le support de siège (23) ayant un corps principal allongé (24) et comprenant :
une partie d'interface (29) qui a un profil comprenant des deuxièmes saillies (31) et évidements alternés, les saillies (31) étant espacées de la même distance d'espacement ; et
un premier élément de renforcement (32) fourni à ou près d'une extrémité avant du corps principal (24), et un deuxième élément de renforcement (54) fourni à ou près d'une extrémité arrière du corps principal (24) ; dans lequel :
le support de siège (23) est configuré de telle sorte que les deuxièmes saillies (31) peuvent être alignées avec les premiers évidements (19) de sorte que la partie d'interface (29) peut être placée à l'intérieur de la fente (14) dans une position d'engagement, le support de siège (23) étant mobile par rapport à la fente (14), à partir de la position d'engagement dans une position de renforcement dans laquelle les premières et deuxièmes saillies (18, 31) sont sensiblement alignées, empêchant la partie d'interface (29) d'être retirée de la fente (14) ;
soit le premier élément de renforcement (32), soit le deuxième élément de renforcement (54), est un élément de renforcement fixe, étant fixé sensiblement en place par rapport au corps principal (24) du support de siège (23), de sorte qu'à la fois dans la position d'engagement et la position de renforcement, le premier élément de renforcement (32) peut être reçu dans l'un des évidements (19) du rail (11) ;
soit l'autre premier élément de renforcement (32), soit l'autre deuxième élément de renforcement (54), est un élément de renforcement mobile, qui est mobile par rapport au corps principal (24) du support de siège (23), entre une position rétractée, dans laquelle, lorsque la partie d'interface (29) est placée à l'intérieur de la fente (14), l'élément de renforcement mobile est au-dessus du niveau du rail (11), et une position de verrouillage, dans laquelle, lorsque la partie d'interface (29) est placée à l'intérieur de la fente (14), l'élément de renforcement mobile s'étend dans la fente (14) ;
**caractérisé en ce que**, lorsque le support de siège (23) est dans la position de renforcement et l'élément de renforcement mobile (54) est dans la position de verrouillage, les premier et deuxième éléments de renforcement (32, 54) sont dans une position pour être reçus dans des évidements (19) respectifs du rail (11), le premier élément de renforcement (32) est dans une position pour s'appuyer contre une première paire d'épaulements (8) sur le rail (11) lesquels sont orientés vers l'arrière du corps principal (24), et le deuxième élément de renforcement (54) est positionné pour s'appuyer contre une deuxième paire d'épaulements (7) sur le rail (11) lesquels sont orientés vers l'avant du corps principal (24).

2. Un support de siège (23) selon la revendication 1, dans lequel le premier élément de renforcement (32) est fourni à ou près de l'avant du corps principal (24), et le deuxième élément de renforcement (54) est fourni à ou près de l'arrière du corps principal (24).

3. Un support de siège (23) selon la revendication 1 ou 2, comprenant en outre un élément d'actionnement (41) qu'un utilisateur peut actionner pour déplacer l'élément de renforcement mobile (54) entre la position rétractée et la position verrouillée et, de préférence, dans lequel l'élément d'actionnement (41) peut pivoter par rapport au corps principal (24).

4. Un support de siège (23) selon la revendication 3, comprenant en outre un mécanisme de verrouillage (37), actionnable pour verrouiller l'élément de renforcement mobile (54) dans la position verrouillée lorsque l'élément de renforcement mobile (54) est déplacé de la position rétractée à la position verrouillée par l'actionnement de l'élément d'actionnement (41).

5. Un support de siège (23) selon la revendication 4, dans lequel le mécanisme de verrouillage (37) comprend un élément de verrouillage (44) qui est mobile entre une position verrouillée et une position déverrouillée et, de préférence, dans lequel l'élément de renforcement mobile (54) pivote par rapport au corps principal (24) entre la position rétractée et la position de verrouillage, et dans lequel, lorsque l'élément de verrouillage (44) est dans la position verrouillée, l'élément de renforcement mobile (54) ne peut pas pivoter par rapport au corps principal (24).

6. Un support de siège (23) selon la revendication 5, dans lequel l'élément de verrouillage (44) est sollicité pour se mettre en position verrouillée.

7. Un support de siège (23) selon l'une quelconque des revendications 4 à 6, comprenant en outre une poignée qu'un utilisateur peut saisir pour retirer l'élément de renforcement mobile (54) de la position verrouillée.

8. Un support de siège (23) selon l'une quelconque des revendications 4 à 6, dans lequel l'élément de renforcement mobile (54) est attaché à ou porté par une partie du mécanisme de verrouillage (37).

9. Un support de siège (23) selon l'une quelconque des revendications précédentes dans lequel, lorsque l'élément de renforcement mobile (54) est dans la position verrouillée, au moins une protrusion de la partie d'interface (29) est pressée contre la face inférieure d'au moins une des lèvres (16, 17) du rail (11).

10. Un support de siège (23) selon l'une quelconque des revendications précédentes, dans lequel l'élément de renforcement mobile (54) est approprié pour engager progressivement la paire d'épaulements (7) à mesure que l'élément de renforcement mobile (54) est déplacé de la position rétractée à la position de verrouillage et, de préférence, dans lequel l'élément de renforcement mobile (54) a une surface inclinée qui est appropriée pour s'appuyer contre la paire d'épaulements (7).

11. Un support de siège (23) selon l'une quelconque des revendications précédentes, dans lequel les premières et/ou deuxièmes saillies (18, 31) ont un profil arrondi.

12. Un support de siège (23) selon l'une quelconque des revendications précédentes dans lequel, lorsque le support de siège (23) est placé sur le rail (11) dans la position d'engagement, puis déplacé longitudinalement par rapport au rail (11), l'élément de renforcement fixe (32) entre en contact avec une paire d'épaulements (8) du rail (11) et sert de butée, de sorte que le support de siège (23) est dans la position de renforcement.

13. Un support de siège (23) selon l'une quelconque des revendications précédentes, dans lequel le rail (11) comprend des épaulements orientés vers l'avant (7) et des épaulements orientés vers l'arrière (8) et dans lequel, dans la position de renforcement, le premier élément de renforcement (32) est approprié pour s'appuyer contre une paire d'épaulements orientés vers l'arrière (8), et le deuxième élément de renforcement (54) est approprié pour s'appuyer contre une paire d'épaulements orientés vers l'avant (7).

14. Un support de siège (23) selon l'une quelconque des revendications précédentes, en conjonction avec un rail (11), lequel comprend :
deux lèvres dirigées vers l'intérieur (16, 17) sur les côtés opposés d'une fente (14), les lèvres (16, 17) fournissant des premières saillies (18) et évidements (19) sur la longueur du rail (11), les saillies (18) étant espacées d'une distance d'espacement, les premières et deuxièmes saillies (18) définissant des surfaces d'épaulement (7, 8) sur chaque côté de celles-ci.

15. Un siège incluant un support de siège (23) selon l'une quelconque des revendications précédentes.
